# EUROPÄISCHE PATENTANMELDUNG

(11) **EP 2 037 643 A1**
(43) Veröffentlichungstag der Anmeldung: **18.03.2009**
(21) Anmeldenummer: 08013729.2
(22) Anmeldetag: 31.07.2008
(51) Int. Cl.: H04L 12/58

(54) **Verfahren zur Übermittlung einer elektronischen Nachricht in einem Transportnetzwerk**

(30) Priorität: 14.09.2007 DE 102007043892
(71) Anmelder: EADS Deutschland GmbH, 85521 Ottobrunn (DE)
(72) Erfinder: Danieli, Markus, 88167 Gestratz (DE); Schnekenbuehl, Frank, 88682 Salem (DE)
(74) Vertreter: Meel, Thomas

(57) **Zusammenfassung**

Die Erfindung betrifft ein Verfahren zur Übermittlung einer elektronischen Nachricht (N1) in einem Transportnetzwerk (T), wobei die Nachricht (N1) geschützte und ungeschützte Inhalte enthält, zwischen einem Sender (S) und einem Empfänger (E),
- wobei ein dem Empfänger (E) vorgeschalteter Prüfer (P)
- die vom Sender (S) versandte ursprüngliche Nachricht (N1) empfängt, welche geschützte und ungeschützte Inhalte enthält,
- die empfangene ursprüngliche Nachricht (N1) zwischenspeichert,
- eine zweite Nachricht (N2) erzeugt, die als geschützte Inhalte ungeschützte Inhalte der ursprünglichen Nachricht (N1) enthält, mindestens:
o Angaben zur eindeutigen Identifizierung der ursprünglichen Nachricht (N1)
o Angaben, die vom Sender (S) in Ihrer Echtheit bestätigt werden sollen,

- die zweite Nachricht (N2) an den Sender (S) versendet;
wobei der Sender (S)
- die vom Prüfer (P) versandte zweite Nachricht (N2) empfängt
- die geschützten Inhalte der zweiten Nachricht (N2) mit ungeschützten Inhalten der ursprünglichen Nachricht (N1) vergleicht,
- bei Übereinstimmung eine dritte Nachricht (N3) zur Bestätigung der Echtheit der ursprünglichen Nachricht (N1) an den Prüfer (P) versendet;
wobei der Prüfer (P)
- die vom Sender (S) versandte dritte Nachricht (N3) empfängt,
- die zwischengespeicherte ursprüngliche Nachricht (N1) an den Empfänger (E) weiterleitet.

## Beschreibung

Die Erfindung betrifft ein Verfahren zur Übermittlung einer elektronischen Nachricht in einem Transportnetzwerk.

Bei der Übertragung von elektronischen Nachrichten (Email) unter Verwendung derzeit gängiger Standards (z.B. X.400 / SMTP) und Verfahren werden Header-Elemente (HE) zum Transport von Hilfsinformationen verwendet. Diese Hilfsinformationen umfassen unter anderem Absenderadresse, Empfängeradressen, Datum/Uhrzeit sowie im militärischen/sicherheitsrelevanten Umgebungen auch Vorrangstufen, Gültigkeitsdauer, alternative Empfänger und VS-Einstufungsgrad. Die HE werden je nach verwendetem Protokoll unterschiedlich kodiert und übertragen.

Die im Header enthaltenen Informationen sind offen zugänglich, da während des Transportvorganges auch weitere HE hinzugefügt werden müssen, z.B. Trace-Informationen der verarbeitenden Message Transfer Agents (MTA).

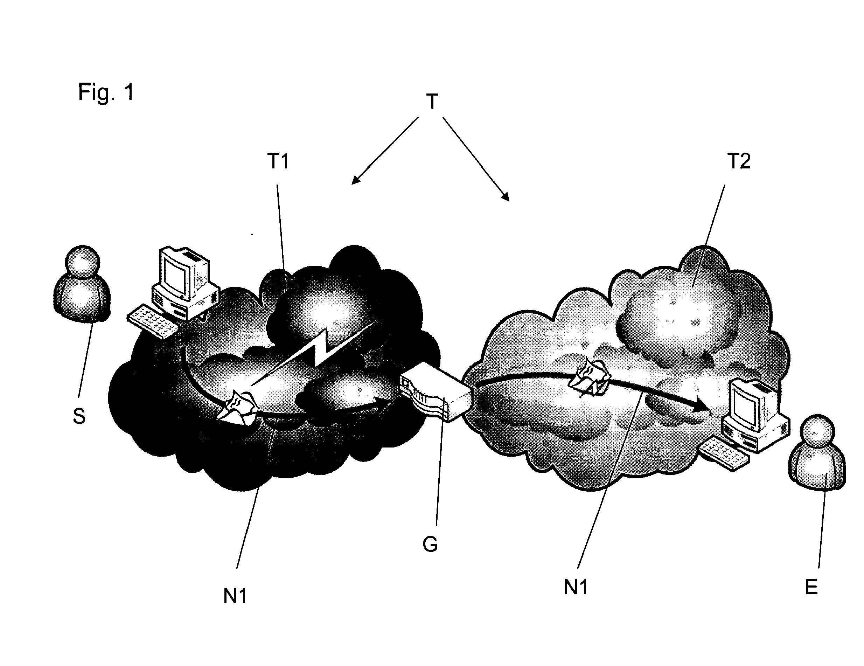

Am Beispiel der in Fig. 1 dargestellten Einsatzumgebung soll die daraus resultierende Problematik näher erläutert werden. In der dargestellten sicherheitsrelevanten Umgebung ist das Transportnetzwerk T in zwei Teilbereiche T1, T2 mit verschiedenen VS-Einstufungsgraden oder verschieden Sicherheitsvorschriften unterteilt. In dem dargestellten Beispiel ist der linke Teilbereich T1 jener mit höherer Vertraulichkeitseinstufung im Vergleich zum rechten Bereich T2. Zur Abgrenzung und Kontrolle des Nachrichtenaustauschs zwischen den Teilbereichen T1 ,T2 kommen spezielle Gateways G zum Einsatz. Diese Gateways bewerten die einzelnen Nachrichten und übertragen diese dann ggf. in den anderen Sicherheitsbereich. Die Entscheidung ob eine Nachricht in den anderen Bereich übertragen wird, wird anhand der HE der jeweiligen Nachricht vorgenommen.

Für den Ablauf ergeben sich folgende Schritte:

### 1. Absenden

Absender S verfasst eine elektronische Nachricht N1 und adressiert Empfänger E. Ausgewählte HE werden vom ihm festgelegt, wie z.B. Betreff oder VS-Einstufung. Der Absender hat die Möglichkeit den Nachrichtenbody für den Empfänger E zu verschlüsseln oder die Nachricht digital zu signieren. Für die digitale Signatur und Verschlüsselung kommen bereits etablierte Verfahren wie S/MIME oder PGP zum Einsatz. Das Transportsystem T überträgt die Nachricht anhand der Adressinformationen in den HE zum Gateway G.

### 2. Bewerten durch Gateway G (Übertragen oder Verwerfen)

Die Bewertung erfolgt insbesondere anhand der VS-Einstufung, die im Header der Nachricht enthalten ist. Entsprechen die HE der definierten Sicherheitspolicy, so wird die Nachricht in den anderen Sicherheitsbereich T2 übertragen, andernfalls wir die Nachricht am Gateway zurückgewiesen.

### 3. Zustellen

Die Nachricht wird durch das Transportsystem im anderen Bereich zum Empfänger E transportiert.

Problematisch an diesem Verfahren ist die Tatsache, dass die Echtheit der HE nicht gewährleistet ist und eine Manipulation der HE nicht entdeckt werden kann. Wird z.B. während des Transports das HE "VS-Einstufungsgrad" manipuliert, kann es dazu kommen, dass vertrauliche Nachrichten entgegen der herrschenden Sicherheitspolicy in den offenen Bereich gelangen.

Der Erfindung liegt die Aufgabe zugrunde, auf der Basis der geltenden Standards ein Verfahren zur Übermittlung elektronischer Nachrichten zu schaffen, mit dem die Echtheit der HE gewährleistet werden kann.

Diese Aufgabe wird mit dem Verfahren nach Anspruch 1 gelöst. Vorteilhafte Ausführungen des erfindungsgemäßen Verfahrens sind Gegenstände weiterer Ansprüche.

Erfindungsgemäß wird durch das Einholen einer nachträglichen Echtheitsbestätigung des Absenders die Echtheit der HE gewährleistet. Dies wird mit einer Transformation der HE der ursprünglichen Nachricht in eine neue Nachricht erreicht, wobei die Inhalte der neuen Nachricht mit an sich bekannten Methoden zur Verschlüsselung und optional digitaler Signatur geschützt sind. Bestätigt der Sender die Echtheit der übermittelten Daten, so gelten auch die zugrunde liegenden HE der ursprünglichen Nachricht als bestätigt. Unter dem Sender, welcher die Nachricht versendet und der später zur Echtheitsbestätigung der Nachricht aufgefordert wird, kann es sich im Sinne dieser Erfindung sowohl um den Mailserver (MTA Message Transfer Agent) als auch um den Client des MTA handeln, also dem Verfasser der Nachricht, welcher die Nachricht zunächst an den MTA weiterleitet.

Das bestehende System aus Sender, Netwerk und Empfänger wird um einen Prüfer erweitert, welches die ursprüngliche Nachricht erst nach Echtheitsbestätigung durch den Sender weiterleitet.

Vorteile dieser Lösung sind:
- es liegen bestätigte HE vor,
- die Erkennung von Manipulationen an HE ist möglich,
- es sind keine Änderungen an bestehenden Infrastrukturen notwendig,
- kein Bruch von etablierten Standards zur Nachrichtenübermittlung,
- es können gängige Technologien zur digitalen Signatur und Verschlüsselung eingesetzt werden,
- sparsamer Umgang mit Transportressourcen.

Im Falle der eingangs beschriebenen Einsatzumgebung mit Netzwerkbereichen unterschiedlicher Vertraulichkeitsstufen und den Übergang vermittelnder Gateways wird der Prüfer dem Gateway vorgeschaltet. Der Prüfer kann gerätetechnisch in das Gateway integriert werden. Eine Prüfung am Gateway und ggf. Weiterleitung an den Empfänger erfolgt erst, nachdem der Prüfer die Echtheit der HE bestätigt hat.

In einer besonders vorteilhaften Ausführung wird von der Originalnachricht ein Fingerprint, also ein Merkmal, welches die Nachricht eindeutig identifiziert, erzeugt, der ebenfalls an den Sender zurückgesandt wird. Der Fingerprint kann z.B. aus der Nachricht abgeleitet werden, insbesondere durch Bilden des Hashwerts. Alternativ kann auch - völlig unabhängig von der Nachricht - eine Zufallszahl generiert werden. Zur Bestätigung der Echtheit der HE reicht es aus, dass der Sender nur noch diesen Fingerprint an den Prüfer zurücksendet. Anhand des Fingerprints ist es für den Prüfer möglich, die ursprüngliche Nachricht zu identifizieren.

In einer weiteren Anwendung des erfindungsgemäßen Verfahrens kann es zur Spam-Abwehr eingesetzt werden. Dabei wird beim absendenden MTA die Echtheitsbestätigung eingeholt. Jeder MTA speichert die Nachrichten IDs der von ihm verschickten Nachrichten und bestätigt diese auf Anfrage.

Die Erfindung wird beispielhaft unter Bezugnahme auf Fig. näher beschrieben.
- Fig. 1: zeigt eine Einsatzumgebung für die Übermittlung elektronsicher Nachrichten nach dem Stand der Technik, wie in der Beschreibungseinleitung beschrieben.
- Fig. 2: zeigt eine Einsatzumgebung zur Anwendung des erfindungsgemäßen Verfahrens.
- Fig. 3: zeigt den Ablauf des erfindungsgemäßen Verfahrens in einem Sequenz- diagramm:
- Fig. 3a): Nachricht absenden und Bestätigung einholen,
- Fig. 3b): bestätigen,
- Fig. 3c): bewerten und zustellen.
- Fig. 4: zeigt den Ablauf des erfindungsgemäßen Verfahrens bei angenommener Manipulation der zu übertragenden Nachricht während des Transports.

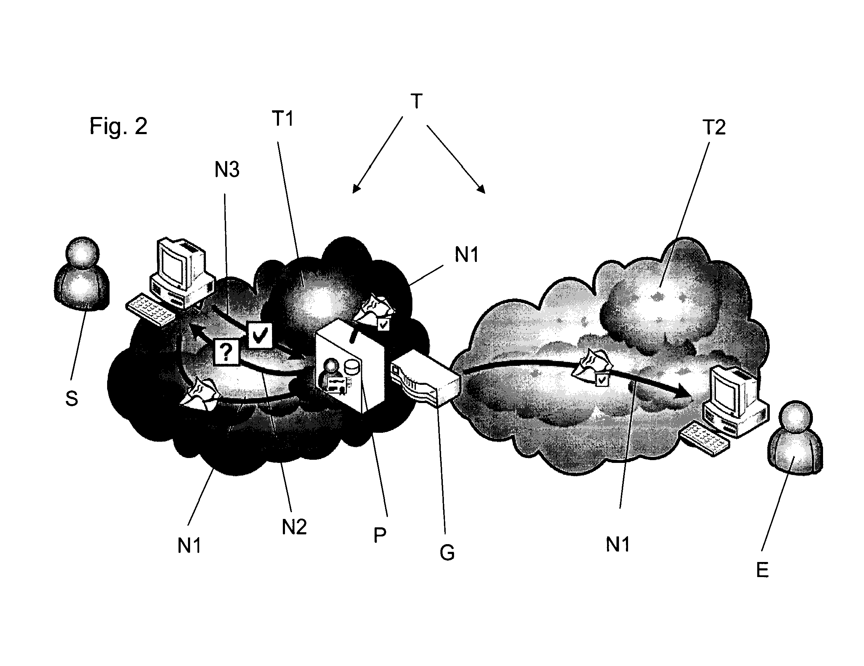

Die Einsatzumgebung für das erfindungsgemäße Verfahren ist in Fig. 2 dargestellt. Gegenüber der Einsatzumgebung nach Stand der Technik gemäß Fig.1 wurde der Prüfer P zusätzlich eingeführt. Er hat die Aufgabe, die Echtheitsbestätigung für die Ursprungsnachricht N1 einzuholen und diese zwischenzuspeichern. Da sich Prüfer P und Gateway G in einer Instanz realisieren lassen, kann eine Bewertung im Gateway G aufgrund der bestätigten HE vorgenommen werden.

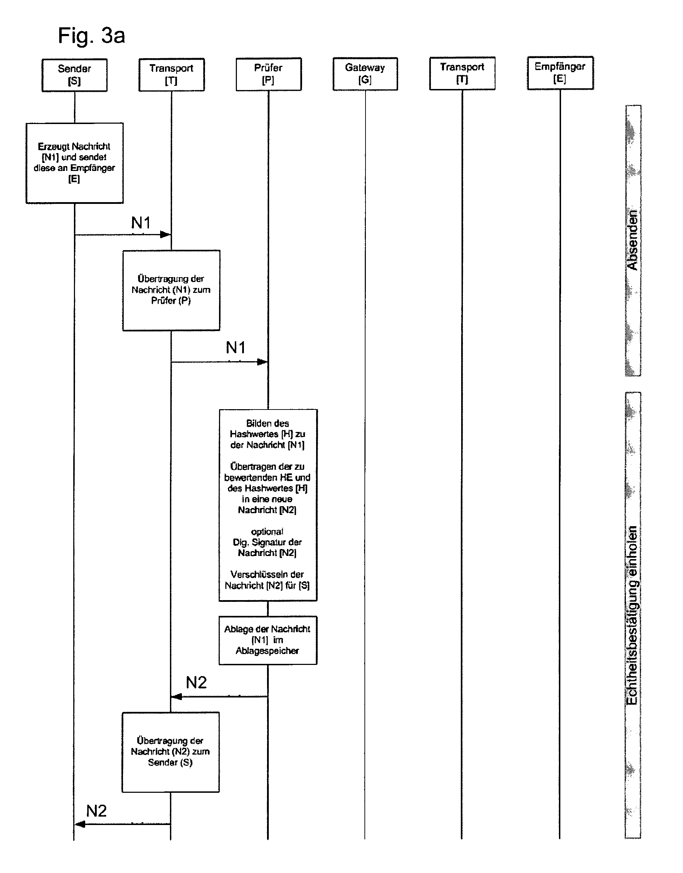

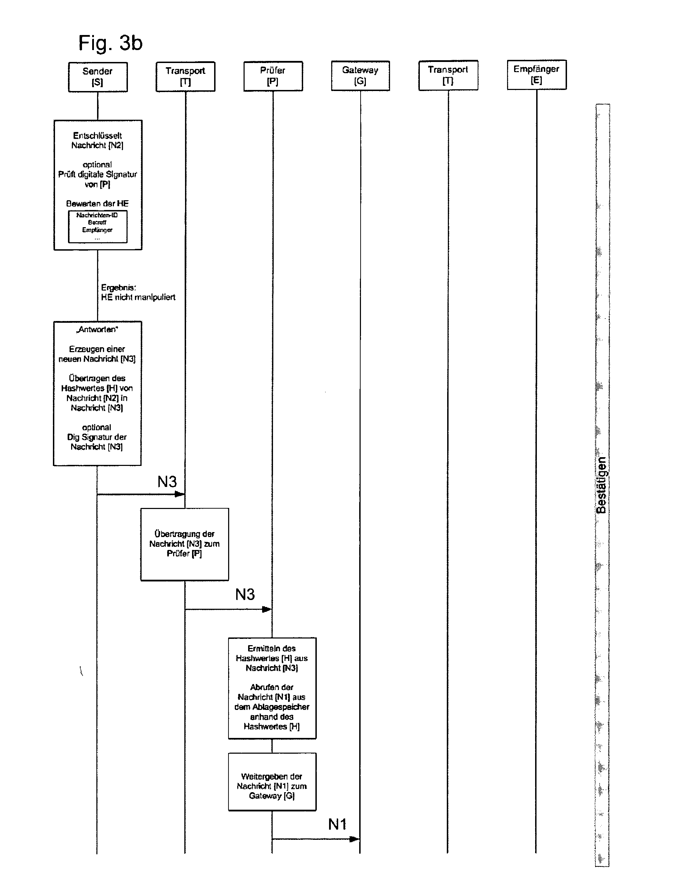

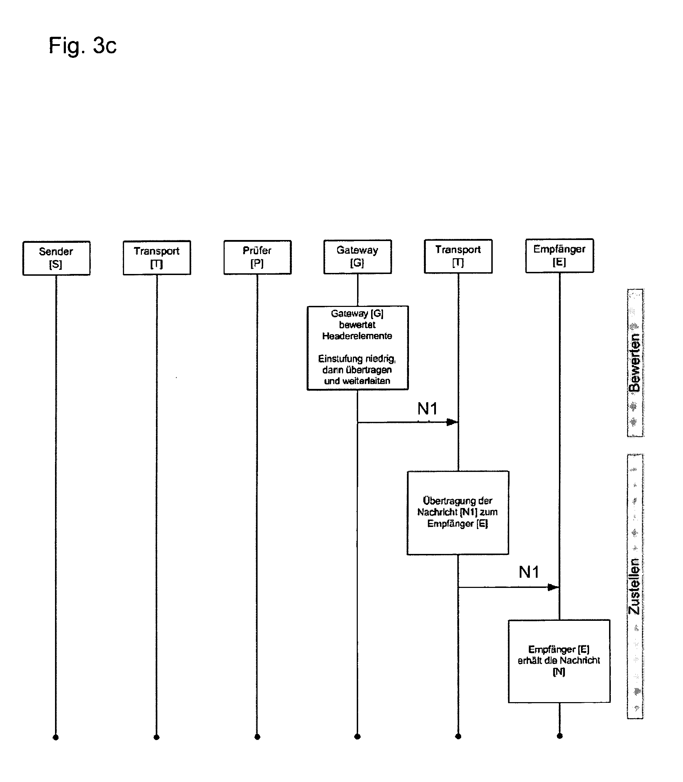

Für den Ablauf des Verfahrens (Fig. 3a, 3b, 3c) ergeben sich folgende Schritte:
1. Absenden
2. Transformieren und Echtheitsbestätigung einholen
3. Bestätigen
4. Bewerten
5. Zustellen

### 1. Absenden

Absender S verfasst eine elektronische Nachricht N1 und adressiert Empfänger E. Ausgewählte HE werden vom ihm festgelegt, wie z.B. Betreff oder VS-Einstufung. Der Absender hat die Möglichkeit, den Nachrichtenbody für den Empfänger E zu verschlüsseln oder die Nachricht digital zu signieren. Für die digitale Signatur und Verschlüsselung kommen bereits etablierte Verfahren wie S/MIME oder PGP zum Einsatz. Das Transportsystem T überträgt die Nachricht N1 anhand der Adressinformationen zum Prüfer P.

### 2. Transformieren und Echtheitsbestätigung einholen

### 2A: Empfang und Hashwertberechnung

Der Prüfer P empfängt die Nachricht N1. Über die gesamte Nachricht N1 wird (mit gängigen Verfahren z.B. MD5) ein Hashwert [H] gebildet. Dieser Hashwert ist wesentlich kürzer (z.B. 1024 Bit) als die Nachricht selbst und ist eindeutig für diese eine Nachricht, so dass dieser Hashwert H als Schlüsselelement zur Ablage der Nachricht verwendet werden kann.

### 2B: Transformation der HE

Die relevanten HE werden in einer natürlichen, für den Menschen lesbaren Form in den Nachrichtenbody einer neuen, zweiten Nachricht N2 transformiert. Es werden sowohl die in ihrer Echtheit zu bestätigenden HE transformiert als auch jene HE, welche der Bestätigende benötigt, um die Ursprungsnachricht eindeutig zu erkennen.

Die folgende Tabelle zeigt die HE, die in die zweite Nachricht übernommen werden, sowie der ihnen im Rahmen des Verfahrens zukommende Zweck:

| **Nutzung zur:** | **HE** |
|---|---|
| Identifizierung der Nachricht | Empfänger |
| " | Absendezeitpunkt |
| " | Nachrichten-ID |
| " | Nachrichtengröße |
| " | Anzahl Anhänge |
| Echtheitsbestätigung | VS-Einstufung |
| " | Vorrangstufe |
| " | Gültigkeitsdauer |

Zusätzlich wird der in Schritt 2A erzeugte Hashwert H in den Nachrichtentext übernommen.

Die zweite Nachricht N2 wird nun für den Sender S der ursprünglichen Nachricht N1 verschlüsselt. Durch diese Verschlüsselung für S wird erreicht, dass nur S die Echtheitsbestätigung für die ursprüngliche Nachricht N1 vornehmen kann, da nur er und der Prüfer P den entsprechenden Hashwert H kennen. Optional kann die Nachricht N2 zusätzlich zur Verschlüsselung mit einer digitalen Signatur versehen werden.

### 2C: Ablage

Die ursprüngliche Nachricht N1 wird mit dem Hashwert H beim Prüfer P gespeichert. Hierbei wird der Hashwert H als Schlüsselkriterium verwendet, um die Nachricht N1 wieder finden zu können. Für die Ablage wird zusätzlich der Zeitpunkt der Ablage gespeichert.

### 2D: Versenden

Die zweite Nachricht N2 wird mit Hilfe des Transportsystems T zum Sender S übertragen. Somit wird der Verfasser der ursprünglichen Nachricht N1 selbst in den Prozess eingebunden, um die Echtheit der HE zu bestätigen.

### 3. Bestätigen

### 3A: Empfang und Prüfung

Der Absender S der ursprünglichen Nachricht N1 empfängt die zweite Nachricht N2 und entschlüsselt den Nachrichtenbody. Der Absender S vergleicht nun den dargestellten Nachrichtenbody, welcher die transformierten HE aus der ursprünglichen Nachricht N1 enthält, mit der von ihm ursprünglich verschickten Nachricht N1.

### 3B: Bestätigen

Kommt Sender S zu dem Schluss, dass die ihm vorgelegten HE korrekt sind, kann er diese in ihrer Echtheit bestätigen, indem er den Hashwert H an den Prüfer P sendet. Hierzu generiert er eine weitere, dritte Nachricht N3 (üblicherweise durch die Funktion "Antworten" auf Nachricht N2) und adressiert den Prüfer P. Es genügt, hierbei den Hashwert H in die neue Nachricht N3 zu übernehmen. Weitere Elemente sind nicht notwendig, da der Hashwert H die Ursprungsnachricht eindeutig identifiziert.

Kommt der Sender S jedoch zum Schluss, dass die vorgelegten HE manipuliert sind, so genügt es, keine weiteren Aktionen vorzunehmen. Eine Negativ-Bestätigung an den Prüfer P wird nicht benötigt. Allerdings kann es aufgrund der angewendeten Sicherheitspolicy notwendig werden, die Manipulation der HE an eine zuständige Stelle zu melden.

### 3C: Versenden

Zur Bestätigung der Echtheit der HE der ursprünglichen Nachricht N1 übergibt Sender S die dritte Nachricht N3 an das Transportsystem T zur Übermittlung an den Prüfer P.

### 4. Bewerten

Es gilt der Grundsatz: Bestätigt der Absender S die Echtheit der mit Nachricht N2 übermittelten Daten durch das Zurücksenden des Hashwertes an den Prüfer, so gelten auch die zugrunde liegenden HE als bestätigt.

### 4A: Empfang

Der Prüfer P empfängt die dritte Nachricht N3 mit der Echtheitsbestätigung von S. Die dritte Nachricht N3 kann optional mit einer digitalen Signatur versehen werden. Ist dies der Fall, so kann nun diese Signatur geprüft und das Prüfungsergebnis ausgewertet werden.

### 4B: Abrufen

Der Hashwert H wird aus der dritten Nachricht N3 extrahiert. Durch die Verschlüsselung der Nachricht N2, welche den Hashwert H enthielt, ist ausreichend gewährleistet, dass nur der Sender S die Echtheitsbestätigung vorgenommen haben kann. Mit Hilfe des Hashwertes H wird nun die ursprüngliche Nachricht N1 aus der Ablage ermittelt.

### 4C: Weiterleiten

Die ursprüngliche Nachricht N1 wird an das Gateway G weitergegeben, welches nun seine Prüfung auf Grundlage von bestätigten HE vornehmen kann, bevor es nach erfolgreicher Prüfung an den Empfänger E weitergeleitet wird. Im Falle der Fig. 3 wird angenommen, dass der als echt bestätigte Vertraulichkeitsgrad der Nachricht N1 geringer war als der nach der geltenden Sicherheitspolicy maximal zulässige Vertraulichkeitsgrad, so dass die Nachricht N1 aus dem sicheren Bereich T1 des Transportnetzwerks in den offenen Bereich T2 des Transportnetzwerks passieren kann.

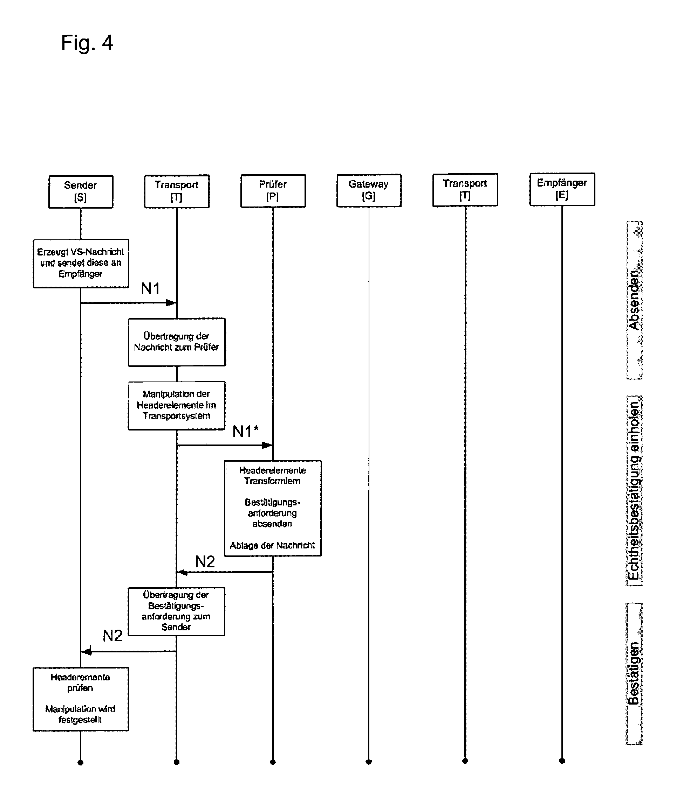

Fig. 4 zeigt den Ablauf des erfindungsgemäßen Verfahrens bei angenommener Manipulation der zu übertragenden Nachricht. Die als vertraulich eingestufte Nachricht N1 soll aus dem vertraulichen Bereich T1 in den offenen Bereich T2 des Transportnetzwerks T gesandt werden. Auf dem Transport vom Sender S zum Prüfer P erfolgt eine Manipulation der HE der Nachricht, bei der der Vertraulichkeitsgrad herabgesetzt wird. Die manipulierte Nachricht ist mit N1* bezeichnet. Es besteht somit die Gefahr, dass die vertrauliche Information über das Gateway G in den offenen Bereich T2 gelangt.

Gemäß dem erfindungsgemäßen Verfahren sendet der Prüfer P die Bestätigungsanforderung N2 an den Sender S. Der Sender S stellt eine Abweichung zwischen den HE der Nachricht N1, wie sie in der Nachricht N2 niedergelegt sind, mit den HE der von ihm ursprünglich gesendeten Nachricht N1 fest. Die Manipulation ist somit erkannt. Da der Prüfer P auf seine Bestätigungsanforderung N2 vom Sender S keine Rückmeldung erhält, wird die bei ihm manipulierte Nachricht N1* nicht weitergeleitet werden.

## Patentansprüche

1. Verfahren zur Übermittlung einer elektronischen Nachricht (N1) in einem Transportnetzwerk (T), wobei die Nachricht (N1) geschützte und ungeschützte Inhalte enthält, zwischen einem Sender (S) und einem Empfänger (E),
- wobei ein dem Empfänger (E) vorgeschalteter Prüfer (P)
- die vom Sender (S) versandte ursprüngliche Nachricht (N1) empfängt, welche geschützte und ungeschützte Inhalte enthält,
- die empfangene ursprüngliche Nachricht (N1) zwischenspeichert,
- eine zweite Nachricht (N2) erzeugt, die als geschützte Inhalte ungeschützte Inhalte der ursprünglichen Nachricht (N1) enthält, mindestens:
○ Angaben zur eindeutigen Identifizierung der ursprünglichen Nachricht (N1)
○ Angaben, die vom Sender (S) in Ihrer Echtheit bestätigt werden sollen,
- die zweite Nachricht (N2) an den Sender (S) versendet;
wobei der Sender (S)
- die vom Prüfer (P) versandte zweite Nachricht (N2) empfängt
- die geschützten Inhalte der zweiten Nachricht (N2) mit ungeschützten Inhalten der ursprünglichen Nachricht (N1) vergleicht,
- bei Übereinstimmung eine dritte Nachricht (N3) zur Bestätigung der Echtheit der ursprünglichen Nachricht (N1) an den Prüfer (P) versendet;
wobei der Prüfer (P)
- die vom Sender (S) versandte dritte Nachricht (N3) empfängt,
- die zwischengespeicherte ursprüngliche Nachricht (N1) an den Empfänger (E) weiterleitet.

2. Verfahren nach Anspruch 1, **dadurch gekennzeichnet, dass** das Transportnetzwerk (T) Bereiche (T1,T2) unterschiedlicher Vertraulichkeitsstufen umfasst, wobei ein Gateway (G) die Übermittlung der Nachrichten zwischen den Transportnetzwerk-Bereichen (T1,T2) unterschiedlicher Vertraulichkeitsstufen kontrolliert, wobei
- die erste Nachricht ungeschützte Angaben zur Vertraulichkeitseinstufung der Nachricht enthält,
- die zweite Nachricht (N2) als geschützte Inhalte Angaben zur Vertraulichkeitseinstufung der ursprünglichen Nachricht (N1) enthält,
- der Prüfer (P) die zwischengespeicherte ursprüngliche Nachricht (N1) nach Bestätigung ihrer Echtheit an das Gateway (G) weiterleitet, von dem es nach erfolgter Prüfung am Gateway (G) an den Empfänger (E) weitergeleitet wird.

3. Verfahren nach Anspruch 1 oder 2, **dadurch gekennzeichnet, dass** der Prüfer (P)
- beim Eingang der ursprünglichen Nachricht (N1) einen Fingerprint (H) der ursprünglichen Nachricht (N1) erzeugt,
- die Zwischenspeicherung der ursprünglichen Nachricht (N1) mit dem Fingerprint (H) als Ordnungskriterium durchführt,
- den Fingerprint (H) als geschützten Inhalt innerhalb der zweiten Nachricht (N2) an den Sender (S) versendet,
der Sender (S)
- den Fingerprint (H) innerhalb der dritten Nachricht (N3) zur Bestätigung der Echtheit der ursprünglichen Nachricht (N1) an den Prüfer (P) übersendet,
der Prüfer (P)
- anhand des mit der dritten Nachricht (N3) übersandten Fingerprints (H) die zwischengespeicherte ursprüngliche Nachricht (N1) ermittelt.

4. Verfahren nach Anspruch 3, **dadurch gekennzeichnet, dass** der Fingerprint (H) durch Erzeugung des Hashwerts der ursprünglichen Nachricht (N1) erzeugt wird.

5. Verfahren nach einem der vorangehenden Ansprüche, **dadurch gekennzeichnet, dass** die ungeschützten Inhalte der ursprünglichen Nachricht (N1) im Nachrichten-Header enthalten sind und die geschützten Inhalte in dem Nachrichten-Body enthalten sind.

6. Verfahren nach einem der vorangehenden Ansprüche, **dadurch gekennzeichnet, dass** der Schutz der geschützten Inhalte der zweiten Nachricht (N2) durch Verschlüsselung realisiert wird.

7. Verfahren nach Anspruch 6, **dadurch gekennzeichnet, dass** der Schutz der geschützten Inhalte der zweiten Nachricht (N2) zusätzlich durch eine digitale Signatur realisiert wird.

8. Verfahren nach einem der vorangehenden Ansprüche, **dadurch gekennzeichnet, dass** die dritte Nachricht (N3) mittels einer digitalen Signatur geschützt ist.
